# EUROPÄISCHE PATENTSCHRIFT

(11) **EP 4 355 172 B1**
(45) Veröffentlichungstag und Bekanntmachung des Hinweises auf die Patenterteilung: **30.04.2025**
(21) Anmeldenummer: 22732216.1
(22) Anmeldetag: 09.06.2022
(51) Int. Cl.: A47B 9/04, F16B 7/18, G01B 7/16

(54) **HÖHENVERSTELLBARES TISCHBEIN, TISCHGESTELL UND TISCH**
HEIGHT ADJUSTABLE LEG, TABLE SUPPORT AND TABLE
PIED REGLABLE EN HAUTEUR, PIETEMENT DE TABLE ET TABLE

(30) Priorität: 17.06.2021 DE 102021206231
(43) Veröffentlichungstag der Anmeldung: 24.04.2024
(73) Patentinhaber: Veyhl GmbH, 75389 Neuweiler (DE)
(72) Erfinder: HARTMANN, Benedikt, 75387 Neubulach (DE); POMMERENKE, Uwe, 71159 Mötzingen (DE); BRUDER, Wolfgang, 72226 Simmersfeld (DE)
(74) Vertreter: Kohler Schmid Möbus Patentanwälte
(86) Internationale Anmeldenummer: PCT/EP2022/065684
(87) Internationale Veröffentlichungsnummer: WO 2022/263284

(56) Entgegenhaltungen:
- WO-A1-2013/159776
- CN-U- 217 756 784
- DE-U1- 202010 015 736

## Beschreibung

### Hintergrund der Erfindung

Die Erfindung betrifft ein höhenverstellbares Tischbein mit einer Aufnahmeeinrichung, mit einer Gewindespindel und einem Lagerflansch, über welchen die Gewindespindel drehbar an einem Boden der Aufnahmeeinrichtung abgestützt ist. Die Erfindung betrifft ferner ein höhenverstellbares Tischgestell mit zwei Tischbeinen sowie einen höhenverstellbaren Tisch mit einer Tischplatte und einem Tischgestell.

Tischbeine der eingangs genannten Art sind aus dem Stand der Technik, beispielsweise aus WO 2013/159776 A1, bekannt. Solche Tischbeine werden insbesondere bei höhenverstellbaren Schreibtischen eingesetzt. Um im Falle von bei der Höhenverstellung allfällig stattfindenden Kollisionen eine Beschädigung des Tisches bzw. der Kollisionspartner zu vermeiden, ist es grundsätzlich bekannt, eine Sensorik zur Erkennung solcher Kollisionen einzusetzen. Gemäß der zuvor genannten WO 2013/159776 A1 kann der Lagerflansch ein Piezoelement mit einem Durchgangsloch für die Spindel aufweisen, um auf die Spindel wirkende Kräfte zu erfassen.

Aus EP 1 704 797 B1 ist ein Arbeitstisch mit einem der Höhe nach verstellbaren Gestell bekannt, zu dessen Verstellung wenigstens ein an einem Stelltrieb angreifender elektrischer Motor mit einer Steuereinrichtung vorgesehen ist. Wenigstens ein lastabtragender Teil verbindet den Stelltrieb mit einem Verstellteil eines Teleskopbeines des Gestells. Der lastabtragende Teil ist mit einem Dehnmessstreifen versehen. Der Dehnmessstreifen steuert die Steuereinrichtung für den Motor in Abhängigkeit von der Größe einer Belastungsänderung des lastabtragenden Teils an. Der lastabtragende Teil kann als Biegeträger ausgebildet sein. Ein ähnlicher Tisch ist in SE 516 479 C2 beschrieben.

DE 20 2010 015 736 U1 beschreibt einen Linearantrieb umfassend einen Elektromotor, der in einem Gehäuse angeordnet ist und eine Motorachse aufweist, die über ein Getriebe eine Spindel treibt, an der eine gegen Rotation fixierte Spindelmutter angebracht ist, die mit einer Stellkomponente wirkverbunden oder selbst als Stellkomponente ausgeformt ist. Die Stellkomponente umfasst eine Klemmschutzvorrichtung mit einem Kraftsensor, der zum Erfassen von Hindernissen oder Hemmnissen in der Bewegung der Stellkomponente und/oder der Spindelmutter Signale des Kraftsensors erzeugt, wobei der Kraftsensor zwischen dem Motor und dem Gehäuse so angebracht ist, dass er von dem Motor beeinflussbar ist.

### Aufgabe der Erfindung

Es ist eine Aufgabe der Erfindung, eine präzise arbeitende und konstruktiv einfach aufgebaute Sensorik zur Kollisionserkennung bei höhenverstellbaren Tischen anzugeben, welche insbesondere leicht an bestehende Tischbeine adaptiert werden kann.

### Beschreibung der Erfindung

Diese Aufgabe wird erfindungsgemäß gelöst durch ein Tischbein mit den in Anspruch 1 angegebenen Merkmalen sowie ein Tischgestell gemäß Anspruch 13 und einen Tisch gemäß Anspruch 15. In den jeweiligen Unteransprüchen und der Beschreibung sind vorteilhafte Ausführungsformen angegeben.

### Erfindungsgemäßes Tischbein

Erfindungsgemäß ist ein höhenverstellbares Tischbein vorgesehen. Das Tischbein ist mit anderen Worten in seiner Länge veränderlich, um einen Tisch mit dem Tischbein in seiner Höhe zu verstellen. Das Tischbein ist grundsätzlich motorisch höhenverstellbar, d. h. für die Längenänderung kann ein Motor, insbesondere ein Elektromotor, an dem Tischbein wirken.

Das Tischbein weist eine Aufnahmeeinrichtung auf. Die Aufnahmeeinrichtung dient zur Befestigung des Tischbeins an einer Traverse eines Tischgestells oder an einer Tischplatte oder die Aufnahmeeinrichtung dient zur Befestigung des Tischbeins an einem Fußausleger oder zur Abstützung des Tischbeins auf einem Fußboden.

Die Aufnahmeeinrichtung kann in der Art eines Topfes oder als eine im Wesentlichen flache Platte ausgebildet sein. Jedenfalls weist die Aufnahmeeinrichtung einen Boden auf. In Gebrauchslage des Tischbeins erstreckt sich der Boden typischerweise in horizontaler Richtung. Ferner kann die Aufnahmeeinrichtung eine Seitenwand, vorzugsweise zwei einander gegenüberliegende Seitenwände, und/oder eine Rückwand aufweisen. Die Rückwand kann sich zwischen den beiden Seitenwänden erstrecken und vorzugsweise orthogonal zu diesen verlaufen.

Ferner weist das Tischbein eine Gewindespindel und einen Lagerflansch auf. Über den Lagerflansch ist die Gewindespindel drehbar an dem Boden der Aufnahmeeinrichtung abgestützt. Der Lagerflansch ermöglicht es, die Gewindespindel um ihre Längsachse zu drehen, ohne dass sich ihre translatorische Position relativ zu der Aufnahmeeinrichtung ändert. Hierzu kann ein Lager, vorzugsweise ein Wälzlager, zwischen einem an dem Boden festgelegten Außenteil des Lagerflansches und einem an der Gewindespindel festgelegten Innenteil des Lagerflansches angeordnet sein. Das Außenteil und/oder das Innenteil können mehrteilig sein.

Der Lagerflansch ist vorzugsweise formschlüssig an dem Boden der Aufnahmeeinrichtung gehalten. Typischerweise ist der Lagerflansch in eine Ausnehmung des Bodens eingesetzt und übergreift einen Rand der Ausnehmung oberseitig und unterseitig.

Um beim Drehen der Gewindespindel um ihre Längsachse eine Längenveränderung des Tischbeins zu erzeugen, kann die Gewindespindel in ein Gewindestück eingreifen. Das Gewindestück ist rotatorisch an einer von der Aufnahmeeinrichtung beabstandeten Komponente des Tischbeins festgelegt, beispielsweise an einem Fußteil des Tischbeins. Beim Drehen der Gewindespindel werden durch ineinandergreifende Gewindeabschnitte der Gewindespindel und des Gewindestücks die Gewindespindel und das Gewindestück entlang der Längsachse der Gewindespindel relativ zueinander verschoben.

Das Tischbein kann mehrere ineinandergreifende Rohrelemente aufweisen. Die Rohrelemente können sich zwischen der Aufnahmeeinrichtung und dem Fußteil erstrecken. Bei einer Längenveränderung des Tischbeins werden die Rohrelemente teleskopisch zueinander bewegt, d. h. ineinander eingeschoben bzw. auseinander herausgezogen. An dem Fußteil kann einen Fußausleger vorgesehen sein, der sich orthogonal von den Rohrelementen weg erstrecken kann.

Zum Drehen der Gewindespindel kann ein Motor, insbesondere ein Elektromotor, vorgesehen sein. Der Motor ist vorzugsweise an der Aufnahmeeinrichtung gehalten. Alternativ kann der Motor beispielsweise an einer Traverse eines Tischgestells gehalten sein. Der Motor kann unmittelbar an der Gewindespindel angreifen. Alternativ kann zwischen dem Motor und der Gewindespindel ein Getriebe vorgesehen sein.

Erfindungsgemäß weist das Tischbein einen Sensorarm mit einer Dehnungsmesseinrichtung auf. Der Sensorarm ist an der Aufnahmeeinrichtung befestigt und liegt berührend an dem Lagerflansch an. Dabei berührt der Sensorarm ein an dem Boden festgelegtes Teil des Lagerflansches.

Eine Belastung des Tischbeins, insbesondere eine Vertikalbelastung, wird von der Gewindespindel über den Lagerflansch in den Boden der Aufnahmeeinrichtung eingeleitet. Der Sensorarm ist außerhalb dieses Kraftflusspfades angeordnet. Der Sensorarm trägt somit grundsätzlich nicht zur Stabilität oder Belastbarkeit des Tischbeins bei. Es ist dadurch einfach möglich, den Sensorarm bei einem bestehenden Tischbein nachzurüsten. Zudem kann der Sensorarm im Falle eines Defekts leicht ausgetauscht werden.

Wenn sich die Belastung, insbesondere die Vertikalbelastung, des Tischbeins ändert, verformen sich der Lagerflansch sowie die Aufnahmeeinrichtung, insbesondere in einem an den Lagerflansch angrenzenden Bereich, geringfügig. Entsprechend ergibt sich eine (geringfügige) Lageänderung einer Stelle des Lagerflansches, insbesondere derjenigen Stelle, an welcher der Sensorarm den Lagerflansch berührt, gegenüber einer Stelle der Aufnahmeeinrichtung, insbesondere derjenigen Stelle(n), an welcher der Sensorarm an der Aufnahmeeinrichtung befestigt ist. Diese Verformungen bzw. Lageänderungen können sich in der Größenordnung von einigen Hundertstel bis wenigen Zehntel Millimeter bewegen.

Durch die Anlage des Sensorarms an dem Lagerflansch werden die vorgenannten Bewegungen auf den Sensorarm übertragen, sodass sich der Sensorarm (geringfügig) verformt. Diese Verformungen des Sensorarms stellen ein Maß für die Belastung des Tischbeins dar. Die Dehnungsmesseinrichtung ermöglicht es, die Verformung des Sensorarm zu messen. Somit können Belastungen bzw. Belastungsänderungen des Tischbeins über die Dehnungsmesseinrichtung an dem Sensorarm präzise ermittelt werden.

Die Dehnungsmesseinrichtungen kann einen oder mehrere Dehnmessstreifen aufweisen. Mit einem Dehnmessstreifen kann die Dehnungsmesseinrichtung auf besonders einfache Weise bereitgestellt werden. Zudem kann ein Dehnmessstreifen auch kleinste Verformungen präzise messen und einfach ausgewertet werden. Mehrere Dehnmessstreifen sind vorzugsweise in einer Viertel-, Halb- oder Vollbrücke verschaltet. Die Messgenauigkeit der Dehnungsmesseinrichtung kann dadurch weiter verbessert werden.

Zum Auswerten eines Signals der Dehnungsmesseinrichtung kann eine Steuereinrichtung vorgesehen sein. Die Steuereinrichtung dient grundsätzlich auch zum Ansteuern des Motors. Im Falle einer Kollision eines Tisches, welcher das Tischbein aufweist, mit einem Hindernis ändert sich die Belastung des Tischbeins typischerweise schnell und stark. Wenn die Steuereinrichtung mittels der Dehnungsmesseinrichtung eine entsprechende Änderung der Verformung des Sensorarms erkennt, schaltet sie den Motor ab. Typischerweise ist die Steuereinrichtung dazu eingerichtet, eine Drehrichtung des Motors (mithin eine Verstellrichtung des Tischbeins) umzukehren, wenn eine Kollision erkannt wird.

Der Sensorarm kann eine Anlagezunge aufweisen. Die Anlagezunge ragt von einem Hauptabschnitt des Sensorarms ab. Die Anlagezunge kann in der Art eines Vorsprungs an dem Hauptabschnitt vorgesehen sein. Die Anlagezunge liegt an dem Lagerflansch an. Der Hauptabschnitt des Sensorarms berührt den Lagerflansch in der Regel nicht. Indem (nur) die Anlagezunge definiert an dem Lagerflansch anliegt, kann die Genauigkeit der Kollisionserkennung verbessert werden. Die Anlagezunge ermöglicht es, die Relativbewegung zwischen dem Lagerflansch und der Aufnahmeeinrichtung lokal begrenzt in den Hauptabschnitt des Sensorarms einzuleiten. Zudem kann die Anlagezunge eine Anordnung des Sensorarms an einer geeigneten Stelle der Aufnahmeeinrichtung vereinfachen. Die Dehnungsmesseinrichtung ist bei dieser Ausführungsform typischerweise benachbart zu der Anlagezunge an dem Hauptabschnitt angeordnet. Angrenzend an die Anlagezunge können Vertiefungen in dem Hauptabschnitt ausgebildet sein. Eine für die Messgenauigkeit vorteilhafte, lokal konzentrierte Verformung des Sensorarms im Hauptabschnitt wird dadurch weiter begünstigt.

Die Anlagezunge kann einen Halsabschnitt und zwei beidseits über den Halsabschnitt vorstehende Flügelabschnitte aufweisen. Die Flügelabschnitte liegen an dem Lagerflansch an. Der Halsabschnitt verbindet die Flügelabschnitte mit dem Hauptabschnitt. Hierdurch kann die Empfindlichkeit der Dehnungsmesseinrichtung weiter verbessert werden, insbesondere im Hinblick auf Querbelastungen des Tischbeins bzw. ein Kippen des Lagerflanschs gegenüber der Aufnahmeeinrichtung.

Der Sensorarm kann beidenends an der Aufnahmeeinrichtung befestigt sein. Dies gewährleistet eine stabile Verbindung des Sensorarms mit der Aufnahmerichtung und kann die Genauigkeit der Sensorik verbessern. Die Dehnungsmesseinrichtung ist bei dieser Ausführungsform typischerweise mittig am Sensorarm angeordnet. Entsprechend liegt der Sensorarm typischerweise in einem mittleren Bereich, insbesondere mit einer Anlagezunge, an dem Lagerflansch an.

Alternativ kann der Sensorarm einenends an der Aufnahmeeinrichtung befestigt sein und anderenends an dem Lagerflansch anliegen. Dies ermöglicht eine besonders kompakte Konstruktion des Sensorarms.

Der Sensorarm kann an dem Boden der Aufnahmeeinrichtung befestigt sein, beispielsweise verschraubt oder vernietet. Auch dies kann eine kompakte Konstruktion des Sensorarms fördern.

Bevorzugt ist der Sensorarm an einer Seitenwand der Aufnahmerichtung, besonders bevorzugt an zwei einander gegenüberliegenden Seitenwänden der Aufnahmeeinrichtung, befestigt. Dies kann die Genauigkeit der Kollisionserkennung verbessern, insbesondere im Hinblick auf Querbelastungen. Die Seitenwände erstrecken sich typischerweise rechtwinklig zu dem Boden der Aufnahmeeinrichtung. Der Sensorarm kann mit der Seitenwand bzw. den Seitenwänden verschraubt oder vernietet sein. Vorzugsweise dienen Befestigungselemente, beispielsweise Schrauben oder Nieten, sowohl zur Befestigung des Sensorarms an der (jeweiligen) Seitenwand als auch zur Befestigung der Aufnahmeeinrichtung an einer weiteren Komponente, beispielsweise einer Traverse, eines Tischgestells. Der Aufwand zur Integration des Sensorarms kann dadurch weiter verringert werden.

Besonders bevorzugt stützt sich der Sensorarm an einer Rückwand der Aufnahmeeinrichtung ab. Eine Rotation des Sensorarms um ein Befestigungselement kann dadurch auf einfache Weise vermieden werden. Dies vereinfacht insbesondere die Befestigung des Sensorarms an den Seitenwänden der Aufnahmeeinrichtung. Der Sensorarm kann mittels zweier auf einer gemeinsamen Achse angeordneten Befestigungselemente, beispielsweise Nieten, an den Seitenwänden befestigt sein. Die Abstützung des Sensorarms an der Rückwand stellt eine definierte rotatorische Ausrichtung des Sensorarms bezüglich dieser Achse sicher. Die Rückwand erstreckt sich typischerweise rechtwinklig zu dem Boden und den Seitenwänden.

Der Sensorarm kann spiegelsymmetrisch sein. Vorzugsweise ist die Dehnungsmesseinrichtung mittig an dem Sensorarm angeordnet. Dadurch führen Belastungen aus einer bezüglich der Symmetrieebene entgegengesetzten Richtungen zu betragsmäßig gleich großen Signaländerungen der Dehnungsmesseinrichtung.

Der Sensorarm kann ein Blechbiegeteil sein. Eine Blechdicke des Blechbiegeteils kann höchstens 1 mm betragen. Ein solcher Sensorarm kann besonders kostengünstig bereitgestellt werden.

Bevorzugt ist der Sensorarm ein Druckgussteil, besonders bevorzugt ein Aluminium-Druckgussteil. Ein solcher Sensorarm ermöglicht eine besonders genaue Messung der Belastung bzw. Belastungsänderung des Tischbeins.

Vorzugsweise weist der Sensorarm wenigstens einen durch eine Rippe versteiften Führungsabschnitt und einen unversteiften, typischerweise flachen, Verformungsabschnitt auf. Der Verformungsabschnitt kann durch Vertiefungen geschwächt sein. Die Dehnungsmesseinrichtung ist vorteilhafterweise in dem Verformungsabschnitt angeordnet. Indem der Sensorarm außerhalb des Bereichs der Dehnungsmesseinrichtung versteift ist, wird die Deformation des Sensorarms auf den Bereich der Dehnungsmesseinrichtung, d. h. den Verformungsabschnitt, konzentriert. Eine bestimmte Belastungsänderung des Tischbeins führt dadurch zu einer größeren Signaländerung an der Dehnungsmesseinrichtung als bei einem unversteiften Sensorarm. Dies verbessert die Genauigkeit der Kollisionserkennung. Die Rippe ist vorzugsweise einstückig mit dem Sensorarm ausgebildet.

### Erfindungsgemäßes Tischgestell

In den Rahmen der Erfindung fällt ferner ein höhenverstellbares Tischgestell mit wenigstens zwei höhenverstellbaren Tischbeinen. Wenigstens eines der Tischbeine ist ein oben beschriebenes, erfindungsgemäßes Tischbein. Vorzugsweise sind beide bzw. alle Tischbeine jeweils ein oben beschriebenes, erfindungsgemäßes Tischbein. Die Tischbeine sind typischerweise an einer Traverse des Tischgestells befestigbar. Die Tischbeine können feststehend oder schwenkbar an der Traverse befestigbar sein. Die Tischbeine können auch unmittelbar an einer Tischplatte befestigbar sein. Mehrere Tischgestelle mit je wenigstens zwei Tischbeinen können miteinander verbunden sein. Dadurch kann eine gemeinsam höhenverstellbare Anordnung mit mehreren Tischgestellen bzw. Tischen eingerichtet werden.

Bei einem Tischgestell mit zwei erfindungsgemäßen Tischbeinen kann für jedes Tischbein eine eigene Steuereinrichtung zum Auswerten eines Signals der jeweiligen Dehnungsmesseinrichtung vorgesehen sein. Vorzugsweise ist jedoch eine einzige, gemeinsame Steuereinrichtung zum Auswerten von Signalen der Dehnungsmesseinrichtungen der beiden Tischbeine vorgesehen. Vorzugsweise ist die Steuereinrichtung dazu eingerichtet, die Signale der beiden Dehnungsmesseinrichtungen unabhängig voneinander auszuwerten. Die Steuereinrichtung ist mit anderen Worten dazu eingerichtet, zu überprüfen, ob das (individuelle) Signal einer der Dehnungsmesseinrichtungen für sich auf eine Kollision hinweist. Alternativ könnte vorgesehen sein, dass die Steuereinrichtung dazu eingerichtet ist, aus den individuellen Signalen der beiden Dehnungsmesseinrichtungen eine kombinierte Information abzuleiten und die kombinierte Information zur Erkennung von Kollisionen auszuwerten. Die Steuereinrichtung kann in oder an der Traverse angeordnet sein. Alternativ kann die Steuereinrichtung in oder an der Aufnahmeeinrichtung oder an der Tischplatte angeordnet sein.

Das Tischgestell kann einen, vorzugsweise zwei, Plattenträger für eine Tischplatte aufweisen. Die Plattenträger sind vorzugsweise jeweils an der Traverse gehalten. Alternativ können die Plattenträger jeweils an einer der Aufnahmeeinrichtungen gehalten sein.

### Erfindungsgemäßer Tisch

Weiterhin in den Rahmen der vorliegenden Erfindung fällt ein höhenverstellbarer Tisch mit einer Tischplatte und einem oben beschriebenen, erfindungsgemäßen Tischgestell. Die Tischplatte ist typischerweise an Plattenträgern des Tischgestells befestigt. Durch die Sensorik mit dem Sensorarm und der Dehnungsmesseinrichtung können Kollisionen des Tisches, d. h. insbesondere der Tischplatte, der Traverse und/oder der Plattenträger, mit einem Hindernis beim Verstellen der Höhe des Tisches zuverlässig erkannt und durch Abschalten bzw. Umkehren der Verstellbewegung in ihrer Schwere wirkungsvoll verringert werden.

Weitere Merkmale und Vorteile der Erfindung ergeben sich aus den Ansprüchen, der Beschreibung und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: einen erfindungsgemäßen Tisch mit einer Tischplatte und einem erfindungsgemäßen Tischgestell, welches zwei erfindungsgemäße Tischbeine aufweist, in einer schematischen Perspektivansicht;
- Fig. 2: das Tischgestell des Tisches von Figur 1 in einer schematischen Perspektivansicht;
- Fig. 3: ein erstes erfindungsgemäßes Tischbein mit einer Gewindespindel, die mittels eines Lagerflansches an einem Boden einer Aufnahmeeinrichtung abgestützt ist, wobei ein Sensorarm in Form eines Blechbiegeteils an Seitenwänden der Aufnahmeeinrichtungen befestigt ist und mit einer Anlagezunge an dem Lagerflansch berührend anliegt, in einer schematischen Perspektivansicht;
- Fig. 4: einen vergrößerten Ausschnitt aus Figur 3, wobei eine der Seitenwände nicht gezeigt ist;
- Fig. 5: das Tischbein von Figur 3 in einer schematischen Schnittansicht, wobei ein an der Gewindespindel angreifender Motor und eine Steuereinrichtung symbolisch eingezeichnet sind;
- Fig. 6: den Sensorarm des Tischbeins von Figur 3 in einer schematischen Perspektivansicht;
- Fig. 7: ein zweites erfindungsgemäßes Tischbein mit einer Gewindespindel, die mittels eines Lagerflansches an einem Boden einer Aufnahmeeinrichtung abgestützt ist, wobei ein Sensorarm in Form eines Aluminium-Druckgussteils an Seitenwänden der Aufnahmeeinrichtungen befestigt ist und mit einer Anlagezunge an dem Lagerflansch berührend anliegt, in einer schematischen Perspektivansicht;
- Fig. 8: den Sensorarm des Tischbeins von Figur 7 in einer schematischen Perspektivansicht;
- Fig. 9: ein drittes Tischbein ähnlich wie in Figur 7, wobei die Anlagezunge des Sensorarms zwei Flügelabschnitte aufweist, die an dem Lagerflansch anliegen, einer schematischen Perspektivansicht;
- Fig. 10: den Sensorarm des Tischbeins von Figur 9 in einer schematischen Perspektivansicht;
- Fig. 11: ein viertes erfindungsgemäßes Tischbein mit einer Gewindespindel, die mittels eines Lagerflansches an einem Boden einer Aufnahmeeinrichtung abgestützt ist, wobei ein Sensorarm in Form eines Aluminium-Druckgussteils an dem Boden der Aufnahmeeinrichtungen befestigt ist und mit einer Anlagezunge an dem Lagerflansch berührend anliegt, in einer schematischen Perspektivansicht;
- Fig. 12: den Sensorarm des Tischbeins von Figur 11 in einer schematischen Perspektivansicht;
- Fig. 13: einen Sensorarm in Form eines Kragarms zur einseitigen Befestigung an einem Boden einer Aufnahmeeinrichtung eines erfindungsgemäßen Tischbeins, wobei der Sensorarm ein freies Ende zur berührenden Anlage an einem Lagerflansch aufweist, in einer schematischen Perspektivansicht;
- Fig. 14: ein fünftes erfindungsgemäßes Tischbein mit einer Gewindespindel, die mittels eines Lagerflansches an einem Boden einer Aufnahmeeinrichtung abgestützt ist, wobei der Sensorarm von Figur 13 an dem Boden der Aufnahmeeinrichtungen befestigt ist und mit einem freien Ende an dem Lagerflansch berührend anliegt, in einer schematischen Perspektivansicht.

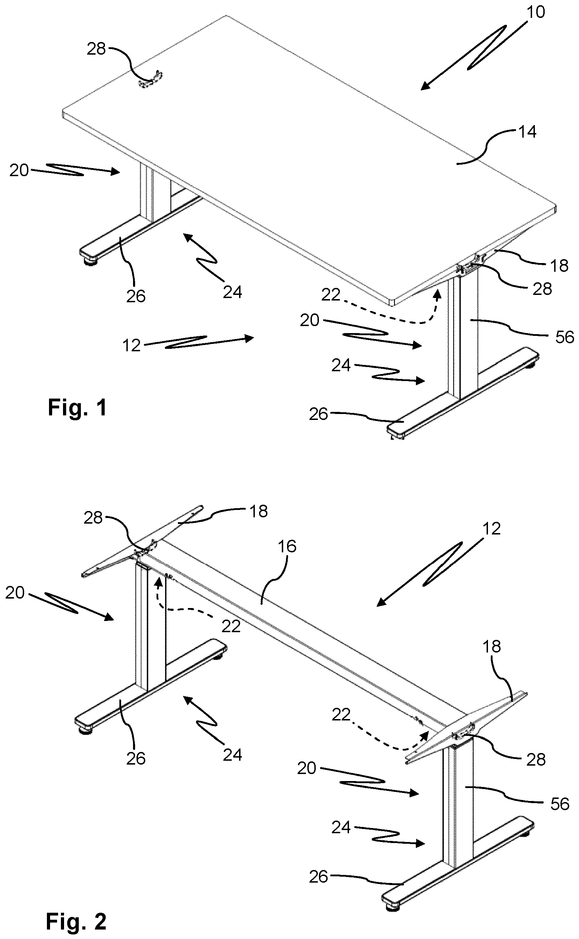

**Figur 1** zeigt einen höhenverstellbaren Tisch **10.** Der Tisch 10 weist ein in **Figur 2** gezeigtes Tischgestell **12** und eine Tischplatte **14** auf. Das Tischgestell 12 weist eine Traverse **16** und zwei Plattenträger **18** auf. Die Tischplatte 14 ist an den Plattenträgern 18 gehalten ist. Ferner weist das Tischgestell 12 zwei Tischbeine **20** auf. Die Tischbeine 20 weisen jeweils eine Aufnahmeeinrichtung **22** und einen Fußteil **24** auf. Die Aufnahmeeinrichtungen 22 sind in den Figuren 1 und 2 durch die Tischplatte 14 bzw. die Traverse 16 verdeckt. Die Fußteile 24 umfassen hier jeweils einen Fußausleger **26.** Zur Höhenverstellung des Tisches 10 bzw. der Tischbeine 20 kann eine (in Gebrauchsstellung vertikale) Entfernung zwischen den Aufnahmeeinrichtungen 22 und den Fußteilen 24 verändert werden. Zur Erkennung von bei der Höhenverstellung allfällig auftretenden Kollisionen ist an den beiden Aufnahmeeinrichtungen 22 jeweils ein Sensorarm **28** angeordnet (in den Figuren 1 und 2 gestrichelt eingezeichnet).

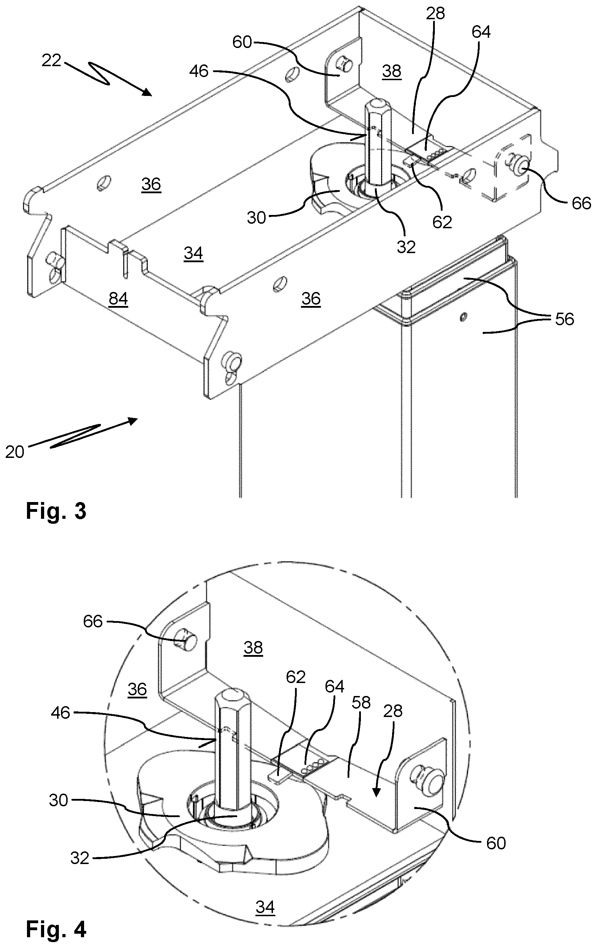

**Figur 3** zeigt den in Gebrauchsstellung oberen Abschnitt eines Tischbeins 20. In **Figur 4** ist ein vergrößerter Ausschnitt mit einem Lagerflansch **30,** einem oberen Ende einer Gewindespindel **32** sowie dem Sensorarm 28 gezeigt.

Die Aufnahmeeinrichtung 22 des Tischbeins 20 ist topfförmig ausgebildet. Die Aufnahmeeinrichtung 22 weist einen Boden **34,** zwei einander gegenüberliegende Seitenwände **36** und eine Rückwand **38** auf. Die Seitenwände 36 und die Rückwand 38 ragen hier senkrecht von dem Boden 34 ab. Die Rückwand 38 kann die beiden Seitenwände 36 miteinander verbinden.

Der Lagerflansch 30 kann mehrteilig sein. Einige der Komponenten des Lagerflanschs 30 können aus Kunststoff, insbesondere faserverstärktem Kunststoff, bestehen. Der Lagerflansch kann eine Weichkomponente, insbesondere zur Geräuschdämpfung beim Verstellen, aufweisen.

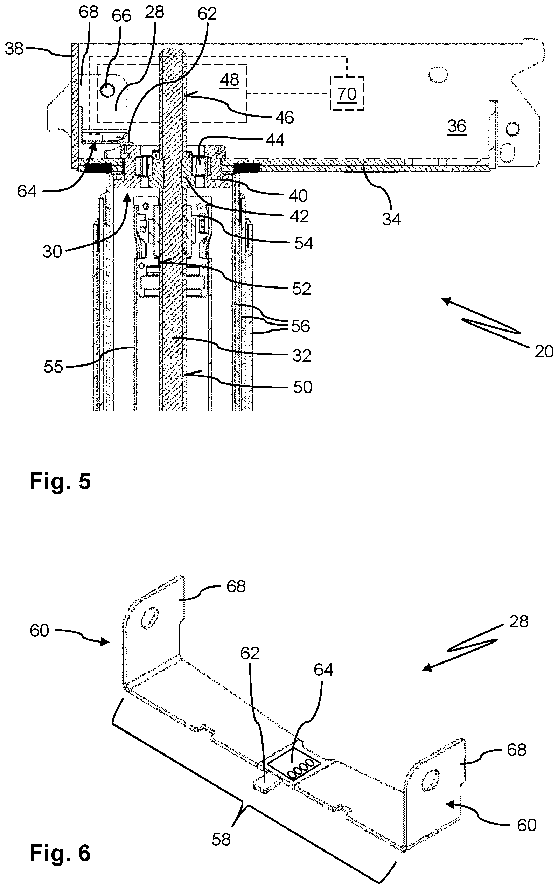

Der Lagerflansch 30 ist formschlüssig in eine Ausnehmung des Bodens 34 eingesetzt, vergleiche auch **Figur 5****.** Ein Außenteil **40** des Lagerflanschs 30 greift ober- und unterseitig über einen Rand der Ausnehmung im Boden 34. Dadurch ist das Außenteil 40 an dem Boden 34 festgelegt. Ein Innenteil **42** des Lagerflanschs 30 ist an der Gewindespindel 32 festgelegt. Das Innenteil 42 ist gegenüber der Gewindespindel 32 weder verschieblich noch drehbar. Zwischen dem Innenteil 42 und dem Außenteil 40 ist ein Lager **44,** beispielsweise ein Wälzlager, angeordnet. Durch den Lagerflansch 30 ist die Gewindespindel 32 drehbar an der Aufnahmeeinrichtung 22 abgestützt. Eine Drehung bewirkt keine (translatorische) Verschiebung der Gewindespindel 32 gegenüber der Aufnahmeeinrichtung 22. Entlang der Gewindespindel 32 wirkende Kräfte werden über den Lagerflansch 30 in den Boden 34 der Aufnahmeeinrichtung 22 eingeleitet.

Oberenends weist die Gewindespindel 32 einen Ankopplungsabschnitt **46** (vergleiche insbesondere Figuren 3 und 4) für einen Motor **48** (vergleiche Figur 5) auf. Der Ankopplungsabschnitt 46 kann in Form eines Außenmehrkants, hier eines Sechskants, ausgebildet sein. Der Motor 48 kann unmittelbar an dem Ankopplungsabschnitt 46 angreifen und an der Aufnahmeeinrichtung 22 abgestützt sein.

Unterenends (unterhalb des Lagerflanschs 30) weist die Gewindespindel 32 einen Außengewindeabschnitt **50** auf. Der Außengewindeabschnitt 50 greift in einen Innengewindeabschnitt **52** eines Gewindestücks **54** des Fußteils 24 ein. Das Gewindestück 54 ist an dem Fußteil 24 undrehbar gehalten, hier über ein Rohrstück **55,** das aus Aluminium bestehen kann. Das Fußteil 24 und die Aufnahmeeinrichtung 22 sind über mehrere, hier drei, ineinander geführte Rohrelemente **56** miteinander verbunden und in ihrer rotatorischen Ausrichtung zueinander fixiert. Eine Drehung der Gewindespindel 32 bewirkt somit eine Längenänderung bzw. Höhenverstellung des Tischbeins 20 bzw. Tisches 10.

**Figur 6** zeigt eine erste Variante des Sensorarms 28. Der Sensorarm 28 ist gemäß den Figuren 3 bis 6 als ein Blechbiegeteil ausgebildet. Eine Blechdicke kann weniger als 1 mm betragen. Der Sensorarm 28 weist einen Hauptabschnitt **58** und zwei gegenüber dem Hauptabschnitt 58 abgewinkelte, hier rechtwinklig abgewinkelte, Befestigungsabschnitte **60** auf. Von dem Hauptabschnitt 58 ragt eine Anlagezunge **62** ab. Die Anlagezunge 62 kann gegenüber dem Hauptabschnitt 60 abgewinkelt sein, beispielsweise zwischen 5° und 25°. Der Sensorarm 28 ist hier spiegelsymmetrisch bezüglich einer Mittelebene durch die Anlagezunge 62.

An dem Sensorarm 28 ist eine Dehnungsmesseinrichtung **64** angeordnet. Die Dehnungsmesseinrichtung 64 umfasst wenigstens einen, hier beispielhaft zwei, nicht im einzelnen dargestellte Dehnmessstreifen. Die beiden Dehnmessstreifen können zu einer Halbbrücke verschaltet sein. Die Dehnungsmesseinrichtung 64 ist auf Höhe der Anlagezunge 62 mittig am Hauptabschnitt 58 des Sensorarm 28 befestigt. Die Dehnmessstreifen der Dehnungsmesseinrichtung 64 können auf den Sensorarm aufgeklebt sein.

Der Hauptabschnitt 58 und die Befestigungsabschnitte 60 könnten beidseits der Dehnungsmesseinrichtung 64 über nicht näher dargestellte Rippen, beispielsweise eingeprägte Sicken, versteift sein.

Der Sensorarm 28 ist an seinen beiden Enden über je eine Niete **66** mit den Seitenwänden 36 der Aufnahmeeinrichtung 22 verbunden, vergleiche Figuren 3 bis 5. Die Nieten 66 durchgreifen dabei Ausnehmungen in den Befestigungsabschnitten 60 des Sensorarms 28 und in den Seitenwänden 36.

Ferner können die Nieten 66 Ausnehmungen in der Traverse 16 durchgreifen und das Tischbein 20 mit der Traverse 16 verbinden.

Der Sensorarm 28 ist an der Rückwand 38 der Aufnahmerichtung 22 abgestützt, vergleiche insbesondere Figur 5. Der Sensorarm 28 kann hierzu Fortsätze **68** aufweisen (vergleiche auch Figur 6), welche an der Rückwand 38 anliegen. Durch die Nietverbindung mit den Seitenwänden 36 und die Anlage an der Rückwand 38 ist der Sensorarm 28 fest an der Aufnahmeeinrichtungen 22 fixiert.

Der Sensorarm 28 liegt mit seiner Anlagezunge 62 berührend an dem Lagerflansch 30 an. Konkret ist die Anlagezunge 62 von oben auf das Außenteil 40 des Lagerflansch 30 aufgesetzt. Der Sensorarm 28 ist so gestaltet und befestigt, dass die Anlagezunge 28 bei Be- oder Entlastung des Tischbeins 20 stets in Kontakt mit dem Lagerflansch 30 bleibt. Bei der Montage kann der Sensorarm 28 hierzu vorgespannt werden.

Wenn sich die Belastung des Tischbeins 20 ändert, bewegt sich der Lagerflansch 30, insbesondere aufgrund von elastischer Verformung, geringfügig gegenüber den Ankoppelpunkten für den Sensorarm 28 an der Aufnahmeeinrichtung 22. Dies führt zu einer Verformung des Sensorarms 28, insbesondere im Bereich der Dehnungsmesseinrichtung 64. Die Aufnahmeeinrichtung 22 und der Lagerflansch 30 sind wesentlich steifer als der Sensorarm 28. Der Sensorarm 28 wirkt daher an der Lastableitung nicht nennenswert mit. Der Sensorarm 28 nimmt lediglich die auftretende Verformung der Aufnahmeeinrichtung 22 und des Lagerflanschs 30 auf, sodass diese mittels der Dehnungsmesseinrichtung 64 erfasst werden kann.

Eine Steuereinrichtung **70** überwacht die Dehnungsmesseinrichtung 64. Die Steuereinrichtung 70 dient ferner zum Ansteuern des Motors 48. Wenn die Steuereinrichtung 70 während des Verstellens der Höhe des Tischbeins 20 mittels der Dehnungsmesseinrichtung 64 eine schnelle und/oder starke Änderung des Verformungszustandes des Sensorarm 28 erkennt, deutet dies auf eine Kollision hin. Die Steuereinrichtung 70 schaltet daher den Motor 48 zunächst ab. Vorzugsweise reversiert die Steuereinrichtung 70 den Motor 48 kurzzeitig, um eine Verklemmung zu lösen. Die Steuereinrichtung 70 kann auch die Dehnungsmesseinrichtung 64 und den Motor 48 eines zweiten Tischbeins 20 eines Tisches 10 überwachen bzw. ansteuern.

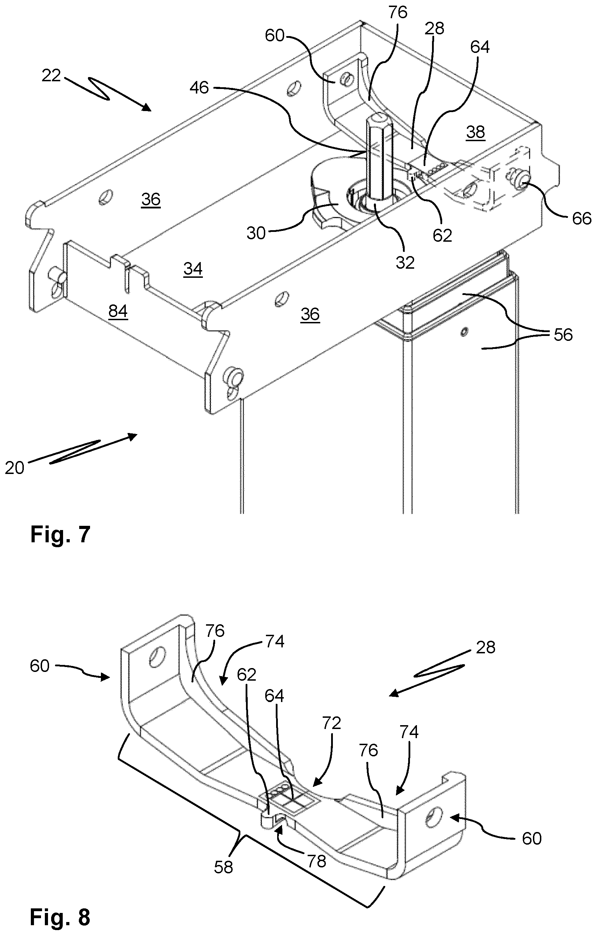

**Figur 7** zeigt ein ähnliches Tischbein 20 wie die Figuren 3 bis 5. Das Tischbein 20 von Figur 7 unterscheidet sich lediglich im Hinblick auf die Gestaltung seines Sensorarms 28 von dem zuvor beschriebenen Tischbein. Der Sensorarm 28 des Tischbeins 20 von Figur 7 ist in **Figur 8** gezeigt.

Hier ist der Sensorarm 28 als ein Druckgussteil, vorzugsweise ein Aluminium-Druckgussteil, ausgebildet. Der Sensorarm 28 weist mittig einen Verformungsabschnitt **72** auf. Beidseits des Verformungsabschnitts 72 sind Führungsabschnitte **74** ausgebildet. Die Führungsabschnitte 74 sind jeweils durch eine Rippe **76** ausgesteift. Der Verformungsabschnitt 72 ist demgegenüber oberseitig flach ausgebildet. Unterseitig sind zwei Vertiefungen **78** in den Verformungsabschnitt 72 eingebracht. Die Vertiefungen 78 erstrecken sich beidseits einer Anlagezunge 62 des Sensorarms 28. Eine Verformung des Sensorarms 28 konzentriert sich daher auf den Verformungsabschnitt 72. Die Dehnungsmesseinrichtung 64 ist im Verformungsabschnitt 72 an dem Sensorarm 28 befestigt, hier oberseitig auf den Sensorarm 28 aufgeklebt.

Der Sensorarm 28 ist wie oben beschrieben über Nieten 66 an den Seitenwänden 36 befestigt. Mit den Rippen 76 liegt der Sensorarm 28 an der Rückwand 38 an.

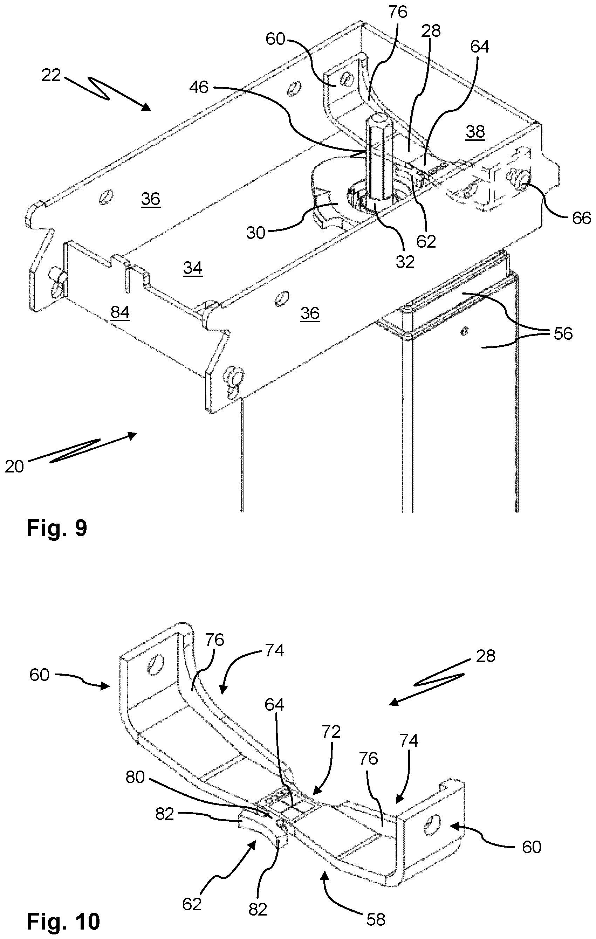

**Figur 9** zeigt ein ähnliches Tischbein 20 wie Figur 7. Der in **Figur 10** gezeigte Sensorarm 28 des Tischbeins 20 von Figur 9 entspricht bis auf die Gestaltung seiner Anlagezunge 62 dem in den Figuren 7 und 8 gezeigten Sensorarm. Vorliegend weist die Anlagezunge 62 einen Halsabschnitt **80** auf, der von dem Hauptabschnitt 58 des Sensorarm 28 abragt. Über den Halsabschnitt 80 stehen zwei Flügelabschnitte **82** seitlich vor. Die Flügelabschnitte 82 liegen an dem Lagerflansch 30 an. Die Flügelabschnitte 82 können eine Krümmung des Lagerflanschs 30 nachbilden.

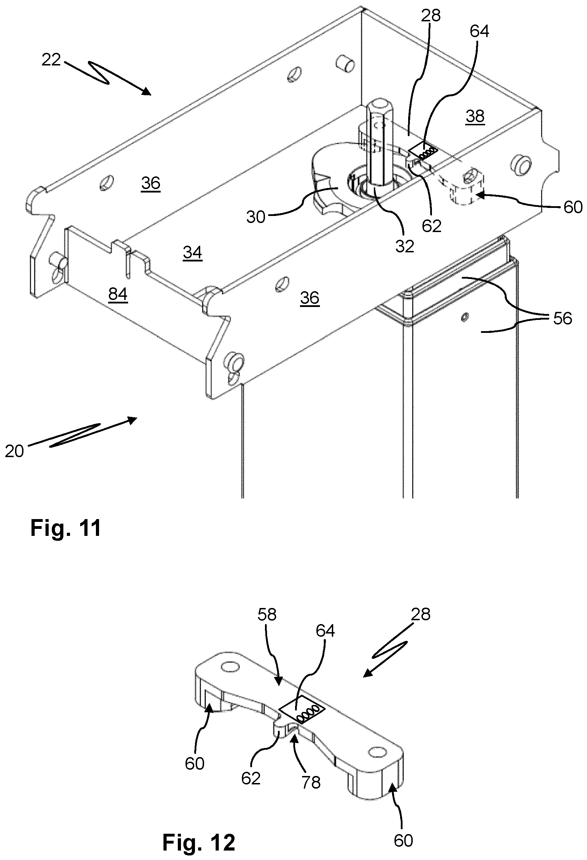

**Figur 11** zeigt ein ähnliches Tischbein 20 wie die Figuren 3 bis 5 bzw. 7. Das Tischbein 20 von Figur 11 unterscheidet sich lediglich im Hinblick auf die Gestaltung und Befestigung seines Sensorarms 28 von den zuvor beschriebenen Tischbeinen. Der Sensorarm 28 des Tischbeins 20 von Figur 11 ist in **Figur 12** gezeigt.

Auch hier ist der Sensorarm 28 als ein Druckgussteil, vorzugsweise aus Aluminium, ausgebildet. Beidseits einer Anlagezunge 62 erstrecken sich Vertiefungen durch einen Hauptabschnitt 58 des Sensorarm 28.

Gemäß Figur 11 ist der Sensorarm 28 an dem Boden 34 der Aufnahmeeinrichtung 22 befestigt. Befestigungsabschnitte 60 des Sensorarms 28 können hierzu in der Art von Füßen beidseitig von dem Hauptabschnitt 58 abstehen.

Die auch in Figur 11 gezeigten Seitenwände 36 sowie die Rückwand 40 und eine Stirnwand **84** könnten entfallen, sodass die Aufnahmeeinrichtung 22 plattenförmig ausgebildet wäre. Ein Motor zum Antreiben der Gewindespindel 32 könnte dann an einer Traverse 16 gehalten sein.

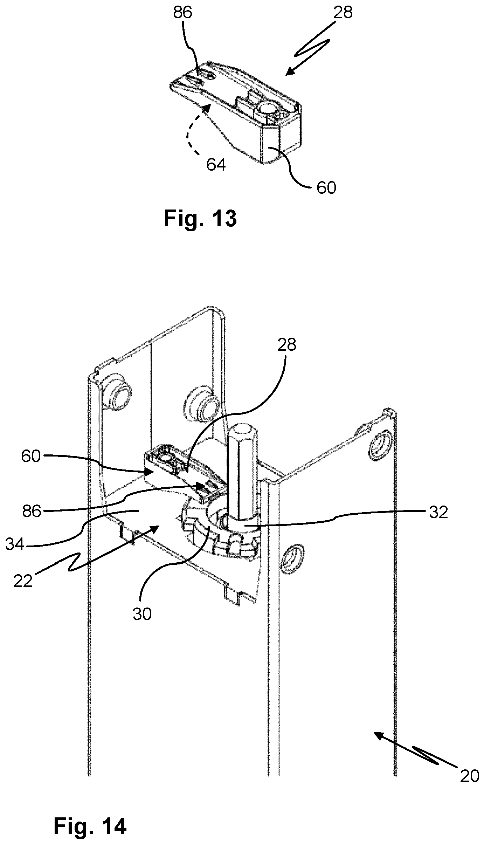

**Figur 13** zeigt einen weiteren Sensorarm 28 zur Befestigung an einem Boden 34 einer Aufnahmeeinrichtung 28 eines Tischbeins 20, vergleiche **Figur 14****.** Anders als der in den Figuren 11 und 12 gezeigte Sensorarm ist der Sensorarm 28 von Figur 13 und 14 in der Art eines Kragarmes ausgebildet. Der Sensorarm 28 weist einenends einen Befestigungsabschnitt 60 zur Befestigung an dem Boden 34 auf. Ein freies Ende **86** des Sensorarm 28 dient zur Anlage an dem Lagerflansch 30.

Zusammenfassend betrifft die Erfindung ein motorisch höhenverstellbares Tischbein mit einer außerhalb des Kraftflusses liegenden Sensorik zur Kollisionserkennung. Eine drehbare Gewindespindel ist in einem Lagerflansch an einer Aufnahmeeinrichtung abgestützt. Ein Sensorarm mit einer Dehnungsmesseinrichtung, welche typischerweise einen oder mehrere Dehnmessstreifen aufweist, ist an der Aufnahmeeinrichtung befestigt und liegt an dem Lagerflansch an, ohne fest mit diesem verbunden zu sein. Aus einer Belastungsänderung resultierende Verformungen des Lagerflanschs sowie der Aufnahmeeinrichtung werden auf den Sensorarm übertragen und mittels der Dehnungsmesseinrichtung erfasst.

### Bezugszeichenliste

Tisch **10**
Tischgestell **12**
Tischplatte **14**
Traverse **16**
Plattenträger **18**
Tischbeine **20**
Aufnahmeeinrichtung **22**
Fußteil **24**
Fußausleger **26**
Sensorarm **28**
Lagerflansch **30**
Gewindespindel **32**
Boden **34**
Seitenwände **36**
Rückwand **38**
Außenteil **40**
Innenteil **42**
Lager **44**
Ankopplungsabschnitt **46**
Motor **48**
Außengewindeabschnitt **50**
Innengewindeabschnitt **52**
Gewindestück **54**
Rohrstück **55**
Rohrelemente **56**
Hauptabschnitt **58**
Befestigungsabschnitte **60**
Anlagezunge **62**
Dehnungsmesseinrichtung **64**
Niete **66**
Fortsätze **68**
Steuereinrichtung **70**
Verformungsabschnitt **72**
Führungsabschnitte **74**
Rippe **76**
Vertiefungen **78**
Halsabschnitt **80**
Flügelabschnitte **82**
Stirnwand **84**
freies Ende **86**

## Patentansprüche

1. Höhenverstellbares Tischbein (20) mit einer Aufnahmeeinrichtung (22) zur Befestigung des Tischbeins (20) an einer Traverse (16) eines Tischgestells (12) oder an einer Tischplatte (14) oder an einem Fußausleger (26) oder zur Abstützung des Tischbeins (20) auf einem Fußboden, einer Gewindespindel (32) und einem Lagerflansch (30), über welchen die Gewindespindel (32) drehbar an einem Boden (34) der Aufnahmeeinrichtung (22) abgestützt ist,
**dadurch gekennzeichnet,**
**dass** ein Sensorarm (28) mit einer Dehnungsmesseinrichtung (64) an der Aufnahmeeinrichtung (22) befestigt ist und berührend an einem an dem Boden (34) festgelegten Teil des Lagerflanschs (30) anliegt.

2. Tischbein (20) nach Anspruch 1, **dadurch gekennzeichnet, dass** die Dehnungsmesseinrichtung (64) einen Dehnmessstreifen aufweist.

3. Tischbein (20) nach Anspruch 1 oder 2, **dadurch gekennzeichnet, dass** der Sensorarm (28) eine Anlagezunge (62) aufweist, die von einem Hauptabschnitt (58) des Sensorarms (28) abragt und an dem Lagerflansch (30) anliegt.

4. Tischbein (20) nach Anspruch 3, **dadurch gekennzeichnet, dass** die Anlagezunge (62) einen Halsabschnitt (80) und zwei beidseits über den Halsabschnitt (80) vorstehende Flügelabschnitte (82) aufweist, mit welchen sie an dem Lagerflansch (30) anliegt.

5. Tischbein (20) nach einem der Ansprüche 1 bis 4, **dadurch gekennzeichnet, dass** der Sensorarm (28) beidenends an der Aufnahmeeinrichtung (22) befestigt ist.

6. Tischbein (20) nach einem der Ansprüche 1 bis 4, **dadurch gekennzeichnet, dass** der Sensorarm (28) einenends an der Aufnahmeeinrichtung (22) befestigt ist und anderenends an dem Lagerflansch (30) anliegt.

7. Tischbein (20) nach einem der Ansprüche 1 bis 6, **dadurch gekennzeichnet, dass** der Sensorarm (28) ein Blechbiegeteil ist, vorzugsweise wobei eine Blechdicke des Blechbiegeteils höchstens 1 mm beträgt.

8. Tischbein (20) nach einem der Ansprüche 1 bis 6, **dadurch gekennzeichnet, dass** der Sensorarm (28) ein Druckgussteil, insbesondere ein Aluminium-Druckgussteil, ist.

9. Tischbein (20) nach einem der vorhergehenden Ansprüche, **dadurch gekennzeichnet, dass** der Sensorarm (28) wenigstens einen durch eine Rippe (76) versteiften Führungsabschnitt (74) und einen Verformungsabschnitt (72) aufweist, wobei die Dehnungsmesseinrichtung (64) in dem Verformungsabschnitt (72) angeordnet ist.

10. Tischbein (20) nach einem der vorhergehenden Ansprüche weiterhin aufweisend eine Steuereinrichtung (70) zum Auswerten eines Signals der Dehnungsmesseinrichtung (64).

11. Tischbein (20) nach einem der vorhergehenden Ansprüche weiterhin aufweisend einen Motor (48) zum Drehen der Gewindespindel (32).

12. Tischbein (20) nach einem der vorhergehenden Ansprüche, **dadurch gekennzeichnet, dass** die Gewindespindel (32) in ein Gewindestück (54) eines Fußteils (24) des Tischbeins (20) eingreift.

13. Tischgestell (12) aufweisend wenigstens zwei Tischbeine (20) nach einem der vorhergehenden Ansprüche und vorzugsweise eine Traverse (16), an der die Tischbeine (20) befestigbar sind.

14. Tischgestell (12) nach Anspruch 13 weiterhin aufweisend eine gemeinsame Steuereinrichtung (70) zum Auswerten von Signalen der Dehnungsmesseinrichtungen (64) der Tischbeine (20), vorzugsweise unabhängig voneinander.

15. Tisch (10) mit einem Tischgestell (12) nach Anspruch 13 oder 14 und mit einer Tischplatte (14).

## Claims

1. A height-adjustable table leg (20) having a receiving device (22) for fastening the table leg (20) to a crossbar (16) of a table support (12) or to a tabletop (14) or to a leg extension (26) or for supporting the table leg (20) on a floor, a threaded spindle (32) and a bearing flange (30), via which the threaded spindle (32) is rotatably supported on a bottom (34) of the receiving device (22),
**characterized in that**
a sensor arm (28) having a strain measurement device (64) is fastened to the receiving device (22) and rests against a part of the bearing flange (30) fixed to the bottom (34).

2. The table leg (20) according to claim 1, **characterized in that** the strain measurement device (64) has a strain gauge.

3. The table leg (20) according to claim 1 or 2, **characterized in that** the sensor arm (28) has a contact tongue (62) which protrudes from a main portion (58) of the sensor arm (28) and rests against the bearing flange (30).

4. The table leg (20) according to claim 3, **characterized in that** the contact tongue (62) has a neck portion (80) and two wing portions (82) protruding beyond the neck portion (80) on either side, with which wing portions (82) it rests against the bearing flange (30).

5. The table leg (20) according to any of claims 1 to 4, **characterized in that** the sensor arm (28) is fastened to the receiving device (22) at both ends.

6. The table leg (20) according to any of claims 1 to 4, **characterized in that** the sensor arm (28) is fastened to the receiving device (22) at one end and rests against the bearing flange (30) at the other end.

7. The table leg (20) according to any of claims 1 to 6, **characterized in that** the sensor arm (28) is a bent sheet metal part, wherein preferably a sheet thickness of the bent sheet metal part is at most 1 mm.

8. The table leg (20) according to any of claims 1 to 6, **characterized in that** the sensor arm (28) is a die-cast part, in particular an aluminum die-cast part.

9. The table leg (20) according to any of the preceding claims, **characterized in that** the sensor arm (28) has at least one guide portion (74) stiffened by a rib (76) and a deformation portion (72), wherein the strain measurement device (64) is arranged in the deformation portion (72).

10. The table leg (20) according to any of the preceding claims, further comprising a control device (70) for evaluating a signal from the strain measurement device (64).

11. The table leg (20) according to any of the preceding claims, further comprising a motor (48) for rotating the threaded spindle (32).

12. The table leg (20) according to any of the preceding claims, **characterized in that** the threaded spindle (32) engages a threaded piece (54) of a foot part (24) of the table leg (20).

13. A table support (12) having at least two table legs (20) according to any of the preceding claims and preferably a crossbar (16) to which the table legs (20) can be fastened.

14. The table support (12) according to claim 13, further having a common control device (70) for evaluating signals from the strain measurement devices (64) of the table legs (20), preferably independently of one another.

15. A table (10) having a table support (12) according to claim 13 or 14 and having a tabletop (14).

## Revendications

1. Pied de table (20) réglable en hauteur, comprenant un dispositif de réception (22) conçu pour fixer ledit pied de table (20) à une traverse (16) d'un châssis de table (12) ou à un plateau de table (14), voire à une poutrelle d'assise (26) en débord, ou pour procurer un appui audit pied de table (20) sur un sol ; une broche filetée (32) ; et une bride de montage (30) par l'intermédiaire de laquelle ladite broche filetée (32) est en appui rotatif sur un fond (34) dudit dispositif de réception (22),
**caractérisé par le fait**
**qu'**un bras de détection (28), muni d'un dispositif (64) mesureur de contraintes, est fixé au dispositif de réception (22) et est en contact avec une partie de la bride de montage (30) assujettie au fond (34), contre laquelle il est en applique.

2. Pied de table (20) selon la revendication 1, **caractérisé par le fait que** le dispositif (64) mesureur de contraintes est équipé d'une jauge de contraintes.

3. Pied de table (20) selon la revendication 1 ou 2, **caractérisé par le fait que** le bras de détection (28) est nanti d'une languette de contact (62) qui fait saillie au-delà d'une région principale (58) dudit bras de détection (28) et est en applique contre la bride de montage (30).

4. Pied de table (20) selon la revendication 3, **caractérisé par le fait que** la languette de contact (62) comprend une région (80) formant col et deux régions (82) formant ailes qui font saillie de part et d'autre, au-delà de ladite région (80) formant col, et par lesquelles ladite languette est en applique contre la bride de montage (30).

5. Pied de table (20) selon l'une des revendications 1 à 4, **caractérisé par le fait que** le bras de détection (28) est fixé au dispositif de réception (22) par les deux extrémités.

6. Pied de table (20) selon l'une des revendications 1 à 4, **caractérisé par le fait que** le bras de détection (28) est fixé au dispositif de réception (22) par une extrémité, et est en applique contre la bride de montage (30) par l'autre extrémité.

7. Pied de table (20) selon l'une des revendications 1 à 6, **caractérisé par le fait que** le bras de détection (28) est une pièce en tôle pliée, l'épaisseur de la tôle de ladite pièce pliée mesurant, de préférence, 1 mm au maximum.

8. Pied de table (20) selon l'une des revendications 1 à 6, **caractérisé par le fait que** le bras de détection (28) est une pièce moulée sous pression, notamment une pièce en aluminium moulée sous pression.

9. Pied de table (20) selon l'une des revendications précédentes, **caractérisé par le fait que** le bras de détection (28) comprend au moins une zone de guidage (74) rigidifiée par une nervure (76), et une zone de déformation (72), le dispositif (64) mesureur de contraintes étant situé dans ladite zone de déformation (72).

10. Pied de table (20) conforme à l'une des revendications précédentes et muni, en outre, d'un dispositif de commande (70) affecté à l'évaluation d'un signal du dispositif (64) mesureur de contraintes.

11. Pied de table (20) conforme à l'une des revendications précédentes et doté, par ailleurs, d'un moteur (48) conçu pour imprimer des rotations à la broche filetée (32).

12. Pied de table (20) selon l'une des revendications précédentes, **caractérisé par le fait que** la broche filetée (32) pénètre dans une pièce taraudée (54) d'une partie d'embase (24) dudit pied de table (20).

13. Châssis de table (12) muni d'au moins deux pieds de table (20) conformes à l'une des revendications précédentes et, préférentiellement, d'une traverse (16) à laquelle lesdits pieds de table (20) peuvent être fixés.

14. Châssis de table (12) selon la revendication 13, comportant par ailleurs un dispositif de commande (70) commun, affecté à l'évaluation de signaux des dispositifs (64) mesurant les contraintes des pieds de table (20), de préférence indépendamment les uns des autres.

15. Table (10) dotée d'un châssis (12) conforme à la revendication 13 ou 14, et d'un plateau (14).
